# EUROPEAN PATENT SPECIFICATION

(11) **EP 2 651 768 B1**
(45) Date of publication and mention of the grant of the patent: **20.05.2020**
(21) Application number: 11849881.5
(22) Date of filing: 15.12.2011
(51) Int. Cl.: G01B 11/00, G01B 21/02, B65B 5/02

(54) **DEVICE FOR THREE DIMENSIONAL MEASUREMENT OF ITEMS**
VORRICHTUNG ZUR DREIDIMENSIONALEN MESSUNG VON GEGENSTÄNDEN
DISPOSITIF DE MESURE TRIDIMENSIONELLE D'ARTICLES

(30) Priority: 15.12.2010 US 423567 P
(43) Date of publication of application: 23.10.2013
(73) Proprietor: Packsize LLC, Salt Lake City, UT 84104 (US)
(72) Inventor: PETTERSSON, Niklas, 723 55 Västerås (SE)
(74) Representative: Browne, Robin Forsythe
(86) International application number: PCT/US2011/065054
(87) International publication number: WO 2012/082980

(56) References cited:
- EP-A2- 2 023 079
- JP-A- H02 280 002
- JP-A- H06 331 342
- JP-A- 2002 222 986
- JP-A- 2005 061 886
- US-A- 2 597 147
- US-A- 5 842 284
- US-B1- 6 373 579
- US-B2- 6 775 012
- US-B2- 7 293 366
- US-B2- 7 647 752

## Description

### RELATED APPLICATIONS

This application claims priority to and the benefit of United States Provisional Patent Application No. 61/423,567, filed on December 15, 2010, entitled APPARATUS, SYSTEMS AND METHODS FOR USING HANDHELD MEASUREMENT DEVICES TO CREATE ON-DEMAND PACKAGING.

### BACKGROUND

With the increasing availability of merchandise, products, and other items not only locally, but through a global market, the need to properly and efficiently package such materials for shipment and delivery has never been more important. Products that are improperly packaged are more likely to be damaged on arrival. Damaged products can result in a significant cost to the provider if the product needs to be returned, replaced, or even if a frustrated consumer decides simply to cancel a purchase. Fortunately, available packaging systems can now be used to produce virtually any style of packaging, including packaging that can safely enclose and store one or more products.

Perhaps the single biggest factor in producing packaging for a product is that the packaging be designed to fit the contained product as precisely as possible. With a more precise fit, the contained item or product not only is less likely to be damaged, but the need for inner packaging is also reduced and possibly eliminated. In particular, when packaging materials (e.g., corrugated cardboard, paper, etc.) are used to create a box or other packaging design, the materials are often creased and folded as near to a right angle possible. Creasing and folding at right angles increases strength characteristics of the packaging materials, thereby giving a resulting box a correspondingly increased resistance to damage when stacked, transported, moved, and the like.

A standard box has twenty-four right angles making up its rectilinear form. If one or more angles deviate from a right angle by more than even a few degrees, other angles can also be comprised and the strength of a resulting box reduced. When strength decreases, the risk of damage or loss to the enclosed item(s) increases. Likewise when packaging fits loosely, similar risks of damage or loss can occur as the sides of the packaging can bow, the corners may sag, and the right angles that make the package strong may be lost.

Using boxes or other packaging that provide a more precise fit can thus provide a dramatic reduction in loss and damage. A more precise fit also produces other significant savings, such as, for example, reducing in the amount of material used in producing a box, reducing and potentially eliminating inner packaging, reducing postage and handling fees, reducing time at the pack line, and increasing transportation yield.

For instance, in the fulfillment industry, it is estimated that shipped items are typically packaged in boxes that are about 40% larger than the shipped items. Boxes that are too large for a particular item are more expensive than a box that is custom sized for the item due to the cost of the excess material used to make the larger box. When an item is packaged in an oversized box, filling material (e.g., Styrofoam, foam peanuts, paper, air pillows, etc.) is often placed in the box to prevent the item from moving inside the box and to prevent the box from caving in when pressure is applied (e.g., when boxes are taped closed or stacked). These filling materials further increase the cost associated with packing an item in an oversized box. Furthermore, customized sized boxes also reduce the shipping costs associated with shipping items compared to shipping the items in oversized boxes. A shipping vehicle filled with boxes that are 40% larger than the packaged items is much less cost efficient to operate than a shipping vehicle filled with boxes that are custom sized to fit the packaged items. In other words, a shipping vehicle filled with custom sized packages can carry a significantly larger number of packages, which can reduce the number of shipping vehicles required to ship that same number of items. Accordingly, in addition or as an alternative to calculating shipping prices based on the weight of a package, shipping prices are often affected by the size of the shipped package. Thus, reducing the size of an item's package can reduce the price of shipping the item.

Existing packaging equipment permits a manufacturer, producer, or vendor to key in a desired box template or potentially the desired dimensions of a box or other package. The equipment can then automatically generate a box template with appropriate cuts and creases. For high volume items, box sizes may be pre-fabricated since repeated sales and/or storage of such items makes it economically feasible to design a package specific to such item or collection of items.

However, it is often not feasible to pre-select box sizes and/or pre-fabricate boxes for low volume items, specialty items, unique collections of items, etc., at least not in a manner that provides a precise fit. For example, a retailer operating an online store may have thousands of different items, and could receive an order for any number of different items, such that the combined size, shape, weight, and other configuration of a desired package would be virtually impossible to predict beforehand. Such combinations have heretofore made it difficult to produce customized packaging economically, due at least in part to the time needed to arrange and measure the items, and key in a box size for each order that includes multiple items. Thus, retailers have generally been forced to select a box from available boxes of standard sizes and fill in the gaps within the box with internal packaging materials.

JP 2002 222986 A1 discloses a collimation device of transmission type photoelectric sensor. JP 2005 061886 A discloses a volume measuring method and instrument. JP H06 331342 A discloses a rectangular parallelepiped dimension-measuring instrument. JP H02 280002 A discloses a measuring instrument for dimension of rectangular parallelepiped. EP 2 023 079 A2 discloses indicia reading terminal having spatial measurement functionality. US 6 373 579 B1 discloses a portable measurement apparatus for determining the dimensions of an object and associated method. US 2 597 147 A discloses a one-piece supporting bracket for tracks for sliding doors. US 5 842 284 A discloses a tape measure with finger grip and finger guard guide. US 7 647 752 B2 discloses a system and method for making custom boxes for objects of random size or shape. US 6 775 012 B2 discloses a dimensioning system. US 7 293 366 B2 discloses a distance measurement device.

### BRIEF SUMMARY

Embodiments of the present disclosure are directed to a system for creating on-demand packaging based on a physical arrangement of items to be placed within the created packaging. Embodiments of the present disclosure include systems, machines, methods, assemblies, and computer-readable media usable to efficiently and automatically produce customized packaging for a wide variety of combinations of different items and products.

According to an aspect there is provided a measurement device as disclosed in claim 1.

The measurement bracket is an angle bracket.

The bracket may include at least first and second surfaces, with the first and second surfaces being offset at an angle that is at least about ninety degrees.

The bracket may include at least two portions. A first portion attaches to an electronic measurement component and a second portion includes a first engagement surface and is offset relative to an electronic measurement component.

A second portion of the bracket may be offset in a direction generally parallel to a first end of an electronic measurement component.

The bracket may include a dual angle construction.

The bracket may define an engagement angle that includes a first engagement surface, and defines an attachment angle including a first attachment surface configured to attach to an electronic measurement component.

A dual angle bracket may have two angles arranged back-to-back.

The bracket may include generally parallel first surfaces and two generally parallel second surfaces, with two angles being secured together along at least a portion of generally parallel second surfaces.

Two angles of a bracket may be at least partially offset in a direction that extends generally parallel to second surfaces and/or generally perpendicular to first surfaces.

An emission mechanism may be configured to extend or emit at least one of a laser, sound wave, ultrasonic wave, or measuring tape.

An electronic measurement component may be configured to measure and store dimensions obtained in three orthogonal directions.

An electronic measurement component may be configured to display three orthogonal dimensions as they are obtained, and/or simultaneously.

An electronic measurement component may be configured to communicate with a package production machine by transmitting dimensional information to the package production machine.

The bracket may further include a second engagement surface, and at least one of first or second engagement surfaces has cut corners.

The bracket may be selectively detachable from an electronic measurement component.

In an embodiment a system for producing on-demand or custom packaging includes a measurement device having an electronic measurement component and an angle bracket detachably secured to the electronic measurement component. The electronic measurement component is capable of obtaining and simultaneously storing measurements made in at least three dimensions. The angle bracket includes an engagement angle configured to engage an arrangement of one or more to-be- packaged items, and includes an attachment angle coupled to the engagement angle and sized to be detachably secured to the electronic measurement component.

An engagement angle may include a first engagement surface generally aligned with an emission end of an electronic measuring component and/or an emission mechanism thereof.

An engagement angle may include at least a second engagement surface extending from a first engagement surface and offset from an electronic measurement component by a distance extending in a direction generally parallel to the first engagement surface or an emission end of the electronic measurement component.

A package production machine may be communicatively coupleable to an electronic measurement device, and the package production machine is configured to receive dimensional information obtained by the electronic measurement device and dynamically and on-demand design and produce a package template from raw production materials.

A package production machine may be communicatively coupled to an electronic measurement device using a wireless or wired connection.

An angle bracket may be used in a custom package production system and includes a first angle and a second angle. The first angle is defined by a first plate and a second plate. The first and second plates are generally perpendicular relative to each other, and define at least two engagement surfaces for engaging an arrangement of one or more to-be-packaged items. The second angle may be defined by a third and a fourth plate, the third and fourth plates being generally perpendicular relative to each other. The third plate defines an attachment surface for connecting the first angle to a measurement device, and the fourth plate defines a transition surface for connecting the third plate to the first angle.

A first plate and a third plate may be generally parallel and a second plate and a fourth plate are generally parallel.

A first plate and a second plate may be offset from each other by a distance extending in a direction generally parallel to a second plate and/or a fourth plate.

A first angle may have a first width and a second angle has a second with, with the second width being less than the first width.

In an embodiment a method is disclosed for producing a customized, on- demand package. In the method, one or more items that are to be packaged are identified and/or arranged in some manner. First, second, and third measurements are obtained using an electronic measuring device. The measurements are provided to a package production machine. The package production machine receives dimensions of the arrangement of items, designs a package template, and produces a package template.

The method may include using a handheld electronic measuring device to obtain first, second, or third measurements of an arrangement of items.

A stop component may be positioned opposite an electronic measurement device when obtaining at least one measurement.

A handheld electronic measurement device may communicate with the package production machine in a wireless or wired manner, or using removable storage media.

This summary is provided to introduce a selection of concepts in a simplified form that are further described below in the Detailed Description. This summary is not intended to identify key features or essential features of the claimed subject matter, nor is it intended to be used as an aid in determining the scope of the claimed subject matter.

Additional features and advantages of the embodiments disclosed herein will be set forth in the description which follows, and in part will be obvious from the description, or may be learned by the practice of the embodiments disclosed herein. The features and advantages of the disclosed embodiments and variations thereof may be realized and obtained by means of the instruments and combinations particularly pointed out in the appended claims. These and other features of the present disclosure will become more fully apparent from the following description and appended claims, or may be learned by the practice of the embodiments as set forth hereinafter.

### BRIEF DESCRIPTION OF THE DRAWINGS

To further clarify various aspects of embodiments of the present disclosure, a more particular description of various features and aspects will be rendered by reference to specific embodiments thereof which are illustrated in the appended drawings. It is appreciated that these drawings depict only typical embodiments of the disclosure and are therefore not to be considered limiting of its scope, nor are the figures necessarily drawn to scale. The embodiments herein will be described and explained with additional specificity and detail through the use of the accompanying drawings in which:
Figure 1 schematically illustrates a system architecture including a measurement apparatus and a packaging production machine;
Figure 2A illustrates an orthogonal view of a measurement apparatus usable in the system architecture of Figure 1;
Figure 2B illustrates a side view of the measurement apparatus of Figure 2A;
Figure 3A illustrates an exploded view of the measurement apparatus of Figure 1, showing a handheld device detached from a measurement assisting bracket;
Figures 3B-3F illustrate additional views of the measurement assistance bracket of Figure 3A;
Figure 4 illustrates a flow chart of a method of producing a customized package for one or more items;
Figures 5A and 5B illustrate obtaining a first measurement for a customized package;
Figures 6A and 6B illustrate obtaining a second measurement for a customized package;
Figures 7A and 7B illustrate obtaining a third measurement for a customized package;
Figure 8 illustrates another embodiment of obtaining a first measurement for a customized package; and

### DETAILED DESCRIPTION OF SOME EXAMPLE EMBODIMENTS

Example embodiments of the present disclosure are directed to apparatus, methods, systems, assemblies, and architectures for creating on-demand packaging. More particularly, exemplary embodiments of the present disclosure are directed to systems, machines, and assemblies, usable to efficiently and automatically produce customized packaging for a wide variety of combinations of different items. Accordingly, example embodiments of the present disclosure may be utilized to efficiently produce packaging on-demand. For instance, such packaging may be customized for a single item or a combination of items in any manner. Such custom and/or on-demand packaging may reduce the likelihood of damage or loss to the items, reduce costs associated with packaging materials or supplies, reduce handling costs, reduce packaging time, or provides any of a number of other benefits, or any combination of the foregoing.

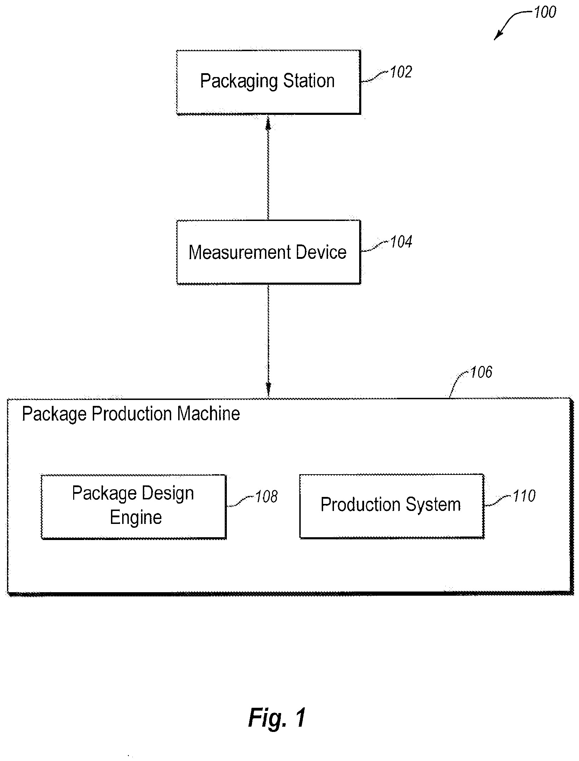

With reference now to Figure 1, one example embodiment of an on-demand packaging system 100 is illustrated. The illustrated on-demand packaging system includes a packaging station 102, a measurement device 104 and a package production machine 106. The package production machine 106 may further include one or more sub-systems. For instance, the package production machine 106 may include a package design engine 108 and/or a production system 110. The operation of such components of the on-demand packaging system 100 is described in greater detail hereafter.

For instance, in accordance with one embodiment, the packaging station 102 may be any location at which one or more to-be-packaged items are gathered. Such items may be gathered for insertion into a package, for arranging in a manner simulating how they will be placed when packaged, for transport of the items, or in any other suitable manner. By way of illustration, in one embodiment, the packaging station 102 may be a conveyor belt, table, arranging station, or any other suitable location(s).

Upon placement of one or more items at the packaging station 102, the items may be measured using the measurement device 104. Operation of the measurement device 104 may occur in any suitable manner, including those disclosed herein. For instance, a single item may be placed at the packaging station 102, and the measurement device 104 may obtain dimensional information about the single item. Such measurements may include, for instance, a full scan of the item, three measurements (*e.g*., height, width, and length) for the item, or any other suitable type of measurement.

The measurement device 104 may also be used to obtain information about more than a single item. For instance, two or more items may be selected for packaging together, and can be arranged at the packaging station 102. The measurement device 104 may then obtain dimensional information about the collection of items. For instance, height, width, and length information may be obtained for the collective set of items, rather than for each item individually. A full scan may also be obtained to obtain three-dimensional information or other dimensional analysis.

Once the measurement device 104 has obtained desired dimensional information, the measurement device 104 may transfer collected data to the package production machine 106. The package production machine 106 may be primarily responsible for producing a template that can be assembled into a package having desired a desired configuration. By way of illustration, the package production machine 106 optionally includes the package design engine 108. The package design engine 108 may be usable to design a template based on supplied information, such as the dimensions of a desired package. There may be multiple styles or types of packages that can be produced. For instance, one type of package may be a once-piece folding box having full-size flaps; another may be a two-piece box with separate top and bottom portions. These examples are merely illustrative and other types of packages may also be available.

The package production machine 106 can use a particular box style and input the dimensions or other information provided by the measurement device to determine the precise locations of sections and segments of a box template. Optionally, the package design engine 108 may automatically select the type of package to be produced, although in other embodiments an operator of the package production machine 106 may select a type of package, or there may be a combination of manual and automatic processes. For instance, the package design engine 108 may evaluate the dimensional information and make various recommendations to the operator. Moreover, in some aspects, the package design engine 108 may swap the measured dimensions to evaluate different potential templates, thereby performing real-time design optimization, and such may be performed automatically, manually, or as a combination of the foregoing. Accordingly, the package design engine 108 may assist in manually or automatically making an intelligent choice for the packaging design. Such design may vary based on factors such as the dimensions (e.g., different choices for large vs. small arrangements), proportions (e.g., long and narrow, flat, cubic, etc.), and the like. Exemplary characteristics and operation of a real-time packaging design optimization system are provided in greater detail in U.S. Patent Serial No. 61/359,753, filed on June 29, 2010, and entitled "REAL-TIME PACKAGING DESIGN OPTIMIZATION". Dimensional information provided by the measurement device 104 may in any case be used to automatically design the box. Thereafter, the template design can be conveyed to the production system 1 10 within the package production machine 106. The production system 1 10 can be responsible for producing the box or other package template by cutting, creasing, scoring, perforating, or otherwise manipulating raw production materials available to the production system. Using such techniques, or any combination thereof, corrugated cardboard or other materials supplied in a fanfold, roll, or other fashion, can be formed into a package template that, when assembled, will have a particular size and shape. Such size and shape may generally correspond to the dimensions provided by the measurement device 104. For instance, the interior capacity of the package assembled from the package template may generally be sized to receive therein the arrangement of one or more items on which the measurement device 104 received dimensional information.
The foregoing description is exemplary only. In some embodiments, for instance, the package design engine 108 and the production system 1 10 may be housed within a unitary device, although in other embodiments they may be separate. For instance, the package design engine 108 may be housed outside of the package production machine 106 and be in communication with the package production machine 106 in a manner that allows the design of a package template to be conveyed to the package production machine 106 in a manner that allows production of the template by the production system 110. The communication between such a package production machine 106 and package design engine 108 may take any form. For instance, there may be a continuously available wireless or wired connection, an intermittent connection, or some other connection. In another embodiment, the package design engine 108 may store package template information on a medium and that medium can be used to transfer the information to the package production machine 106.

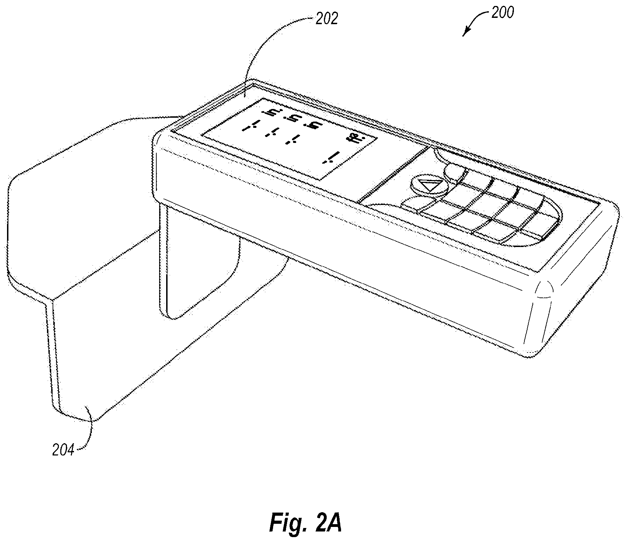

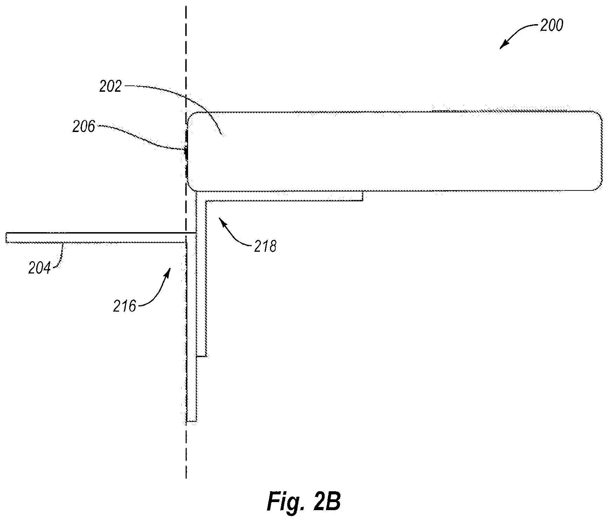

Turning now to Figures 2A and 2B, an exemplary measurement device 200 is illustrated in greater detail. In particular, measurement device 200 includes a measurement component 202 and a bracket 204. The measurement component 202 may be useful to, for instance, obtain a measurement of a particular distance. For instance, the measurement component 202 may utilize a laser, ultrasonic waves, a physical tape, or other mechanism, or any combination thereof to determine a distance, length, or other dimension. By way of illustration, the measurement component 202 may, in one embodiment, include a Leica Disto laser distance meter capable of measuring distance, area, and volume. Such a device may also be able to add or subtract distances, areas, or volumes, determine indirect height and distance measurements for inaccessible locations and measure tilts. In another embodiment, the measurement component 202 may include a Mastech Digital Laser Tape Measure that sends narrow beams of ultrasonic waves. The waves bounce back to the device and a microprocessor converts the elapsed time into a distance and displays it on an LCD screen. A laser may also be included for accuracy of the device. In still other embodiments, the measurement component 202 may include Neiko or Starline digital tape measure. Such a device may include a tape that physically extends a distance and, based on the extension of the tape, includes an LCD display that indicates the measured distance. The foregoing are presented by way of illustration only, other similar devices, or any other device suitable for obtaining a measurement may also be used. Optionally such devices obtain a measurement without an operator being required to interpret the particular dimension measured (*e.g*., by displaying a particular value rather than having an operator determine a tick mark and the value of such tick mark).

In the illustrated embodiment, the measurement component 202 is connected to a bracket 204. The bracket 204 may be connected to the measurement component 202 and facilitate obtaining of an accurate measurement by the measurement component 202. For instance, as shown by the dashed line in Figure 2B, an interior contact surface of the bracket 204 may be generally aligned with the front surface or edge of the measurement component 202 and/or the emission mechanism 206. As described in greater detail hereafter, the bracket 204 may be securely placed against an item such that the interior contact surface of the bracket 204 abuts an item or collection of items that is to be measured. A measurement may then be read and the length, height, width or other dimension of the item or collection can be determined.

In Figures 2A and 2B, it can be seen that bracket 204 has a dual angle design. In particular, an engagement angle 216 may be used to contact an item being measured. An attachment angle 218 may connect to the engagement angle 216 and can be used to couple the engagement angle 216 to the measurement component 202. Thus, the engagement angle 216 may be used to secure the measurement device 200 at a particular position relative to an item being measured, while the attachment angle 218 facilitates securement of the engagement angle 216 relative to the measurement component 202.

In more particular detail, engagement angle 216 and attachment angle 218 each define angles that are about right angles. The right angle of the engagement angle 216 may facilitate, for instance, abutting the bracket 204 against a box, container, object, or other item that has an edge formed by two surfaces that are oriented about perpendicular relative to each other.

In some embodiments, the bracket 204 may be formed separate from the measurement component 202 and/or may be detachable with respect thereto. In other embodiments, the bracket 204 may be formed integrally with the measurement component 202. For instance, the measurement component 202 may include a casing or skin integrally molded, machined, or otherwise formed with all or a portion of the bracket 204.

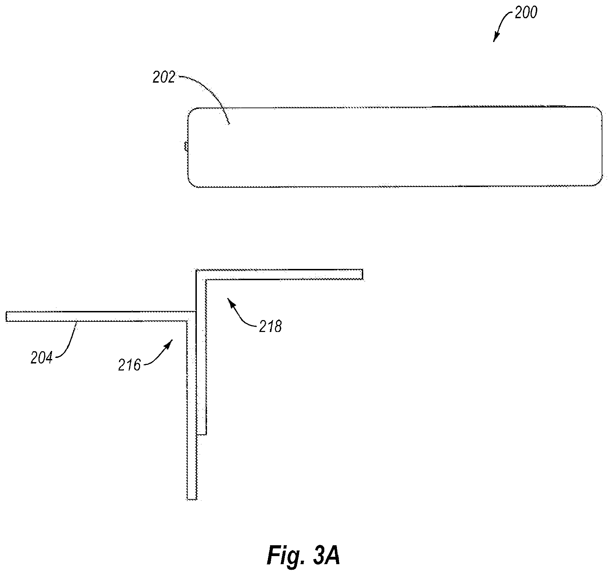

An embodiment in which the bracket 204 is formed separate from the measurement component 202 and/or is detachable with respect thereto is illustrated in Figure 3A. In such an embodiment, the bracket 204 may be attached to the measurement component 202 in any suitable manner. For instance, the bracket 204 may be secured in place using one or more screws, clamps, rivets, hook and loop fasteners (e.g., VELCRO), or other mechanical fasteners. The bracket 204 may also be secured using an adhesive (*e.g*., glue, double-sided tape, epoxy, etc.), or a thermal joint (*e.g*., a weld), or in any other manner.

The bracket 204 is illustrated in additional detail in Figures 3A-3F. It should be appreciated that such an embodiment is merely illustrative of any number of different types of brackets that may be attached to a measurement component 202 and/or used in connection with the methods, systems, assemblies, and devices of the present disclosure.

In the illustrated embodiment, the bracket 204 is generally composed of four generally flat plates. More particularly, the engagement angle 216 may be composed of two plates 208, 212 while the attachment angle 218 is also composed of two plates 210, 214. As described above, plates 208, 212 may be angularly offset relative to each other, and in some embodiments may be about perpendicular relative to each other. Similarly, plates 210, 214 may be angularly offset relative to each other, and in some embodiments may be about perpendicular relative to each other. Such an arrangement is, however merely exemplary.

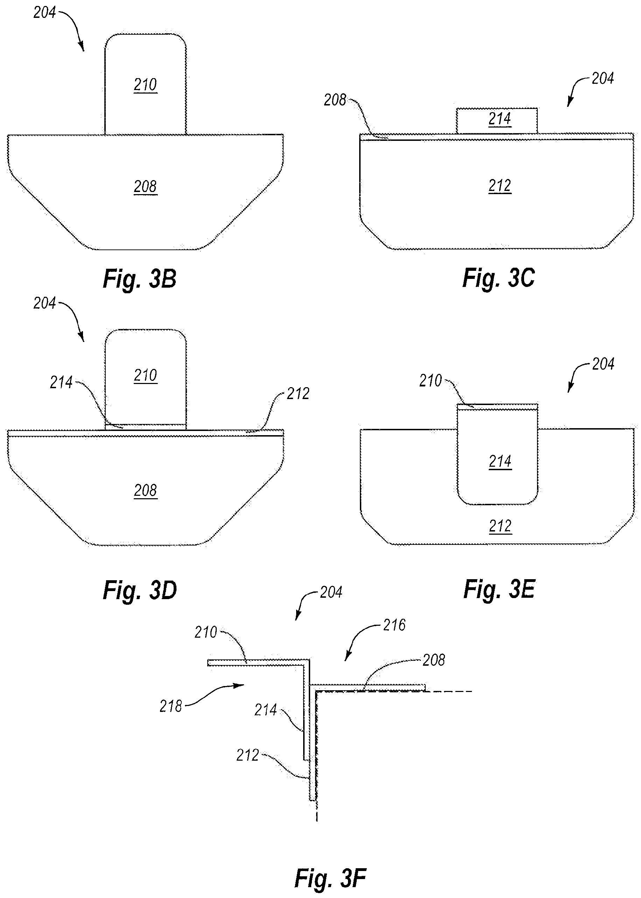

As best illustrated in Figures 3B and 3D, an upper plate 208 of the engagement angle 216 may have a tapered construction. In particular, in the illustrated embodiment, the upper plate 208 is generally trapezoidal, such that at least a portion of the side edges tapers towards the front and rear edges. In other cases, however, the upper plate 208 may take other forms or shapes, including trapezoidal in an opposing direction, rectangular, square, or any other regular or irregular geometric shape. The upper plate 208 may also be considered as having a generally rectangular shape with cut distal corners. In this embodiment, the corners are cut such that a length of the cut corner extends between about 70-80% of the length of the side edges of the upper plate 208, although the corners may be cut anywhere from 0-100%. For instance, at 0%, there may be no cut corners, whereas at 100%, the corners may help to define a pure trapezoidal shape.

The back plate 212 may also have a generally tapered construction as shown in Figures 3C and 3E. In particular, the back plate 212 mates with the upper plate 208 along an edge and extends downward in the illustrated embodiment. At the lower edge, the side edges taper or are inclined inward, so as to form a cut-corner at the lower edge of the back plate 212. The degree to which the corners may vary. In this embodiment, for instance, the corners may be cut at approximately 25-35% of the length of the side edges; however, the corners may be cut at any desired degree, or may not be cut at all.

Together, the back plate 212 and the upper plate 208 define the engagement angle 216 which can be used to assist in mounting a measurement apparatus to an item that is being measured. This is best illustrated in Figure 3F which illustrates an example measurable item in dashed lines. The lower surface of the upper plate 208 and the interior surface of the back plate 212 (illustrated as the right surface) may abut against a corner of an item. Thereafter, a measurement device may be used to take a measurement. For instance, if a laser measuring device is used, a laser may extend in a direction that is generally parallel to the upper plate 208 and generally perpendicular to the back plate 212.

The attachment angle 218 may have a similar construction as the engagement angle 216 although this is merely exemplary. In the illustrated embodiment, for instance, the attachment angle 218 also defines a substantially right angle and itself may resemble an L-bracket. In some embodiments, the width of the attachment angle 218 may be less than a width of the engagement angle 216. For instance, the engagement angle 216 may be configured to engage items of any of a number of different sizes. In contrast, the attachment angle 218 may be configured to attach directly between the engagement angle 216 and a measurement component 202. Thus, the attachment angle 218 may not necessarily be adaptable to accommodate different sized objects. Thus, in one embodiment, a width of the attachment angle 218 generally conforms to a size of a measurement component 202. For instance, an upper plate 210 may attach to a measurement component 202. Consequently, the upper plate 210 may have a size that is about the same size as or less than a width of the measurement component 202. In other embodiments, however, the upper plate 210 may be larger than the measurement component 202 to which it is attached. In this embodiment, a transition plate 214 is used to connect the upper plate 210 of the attachment angle 218 to the engagement angle 216. More particularly, and as best shown in Figures 3A, 3C and 3E, the engagement angle 216 and attachment angle 218 may be offset relative to each other. In particular, in this embodiment, both the engagement angle 216 and the attachment angle 218 form L-shaped brackets that are aligned back-to-back. The transition plate 214 may, however, be offset relative to the back plate 212 of the engagement angle 216. More particularly, in the illustrated orientation, the transition plate 214 is vertically offset relative to at least a portion of the back plate 212, such that the upper plate 210 of the attachment angle 218 is vertically above the upper plate 208 of the engagement angle 216.

As a result of the offset of the transition plate 214 relative to the back plate 212, a measurement device 202 may be offset relative to the upper plate 208 of the engagement angle 216. For instance, as best illustrated in Figure 2B, the measurement component 202 may be vertically higher relative to the upper plate 208 of the engagement angle 216. This may be desirable for any number of reasons. For instance, in one embodiment, an emission mechanism 206 may project, or be positioned relative to the front surface of the measurement component 202. By positioning the upper surface 208 lower relative to the measurement component 202, a beam, laser, wave, tape, or other element extended/emitted from the emission mechanism 206 may be sent outward without obstruction from the bracket 204. The emission mechanism 206 may emit light, another wave, a measuring tape, or another element in a direction generally normal to the front surface of the measurement component 202.

The plates 208, 210, 212, 214 of the angles 216, 218 may be connected to each other in any suitable manner. For instance, in one embodiment, plates 208, 212 are integrally formed and are bent relative to each other to form separate plates at an angle relative to each other. Plates 210 and 214 may be similarly formed. Thereafter, the attachment angle 218 may be attached to the engagement angle 216 by using a mechanical fastener, adhesive, thermal process, or in a variety of different manners. In other embodiments, the plates 208, 212 and/or the plates 210, 214 may be formed separate relative to each other and thereafter joined. In still other embodiments, plates 208, 210, 212, 214 may be formed as an integral or unitary piece, such at through an extrusion process.

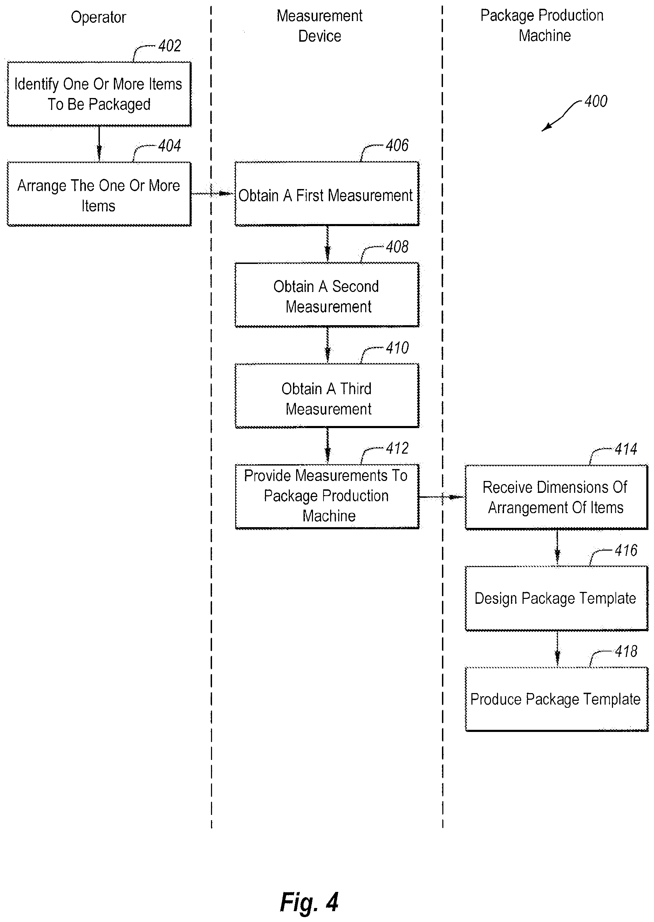

Turning now to Figure 4, an exemplary method 400 for creating a customized package on-demand is illustrated. In the illustrated embodiment, various steps of the method may be performed by different components, although this is not necessarily the case. For instance, a human, robotic, or other operator may perform some aspects of the method 400. A measurement device may perform other aspects of the method, while a package production machine may perform still other embodiments. It should be noted that various steps may, however, be performed by other components. For instance, the measurement device may be integrated within the package production machine, or connected thereto, such that various acts illustrated as being performed by the measurement device may be performed at least partially by the package production machine. In still other embodiments, a package template may be designed external to the package production machine.

In the illustrated embodiment, an operator of some type may identify one or more items as to-be-packaged items (act 402). The items may be arranged (act 404). For instance, if there is a single item, the item may be arranged at a packaging station such as a table, conveyor belt, or the like. Arranging the single item may include determining which way the sides or faces of the item should be oriented. If there are multiple items, arranging the items may include arranging the multiple items in a custom manner in which the operator would also package the items in a custom, on-demand package, and can also be manipulated at by the user during measurement (e.g., where an item is flexible or compressible). Alternatively, or additionally, each of multiple items may be measured independently and thereafter packaged. For instance, the system may recommend a manner for arranging the measured items.

When the items are arranged, a first measurement may be obtained (act 406). For instance, the length of an item or an overall length of an arrangement of items may be obtained. A second measurement can also be obtained (act 408). This may include obtaining a measurement of a width of the item or collection of items. A third measurement may also be obtained (act 410). Such a measurement may correspond to a height of an item or collection of items. Of course, one will appreciate in view of the disclosure herein that the particular type of measurement or dimension obtained (*e.g*., length, width, height) can be obtained in any order. Moreover, some dimensions may be obtained at the same time. For instance, a three-dimensional scanner may be able to obtain all measurements at approximately the same time.

The obtained measurements may also be provided by the measurement device to a package production machine (act 412). The manner in which the measurements are provided can vary in accordance with any number of factors. For instance, the measurement device may have wireless capabilities (e.g., short range radio, Bluetooth, 802.11, etc.). A package production machine may be within range of the measurement device such that measurements of the item or collection of items can be transmitted automatically and/or wirelessly. In other embodiments, the measurement device may be tethered or connectable via a physical, wired connection to the package production machine, so as to transfer obtained measurements. In still other embodiments, a storage device such as a disk, memory card, or the like may store obtained measurements. The storage device may be removed from the measurement device and connected to the package production machine to transfer the dimensional information.

Regardless of the particular manner in which the measurements are provided, the package production machine may receive or otherwise access the dimensions of the arrangement of one or more items (act 414). Based on the dimensions, a package template may be designed (act 416). Design of the package template may also include other aspects, such as the selection of a particular style of package or box to be created. Such selection may be made manually by an operator, or may be automatically performed. After the package template is designed, the package template can be produced (act 418). Producing the package template may include, for instance, use of an automated process within the package production machine that makes the necessary or desired cuts, creases, perforations, scores, and the like.

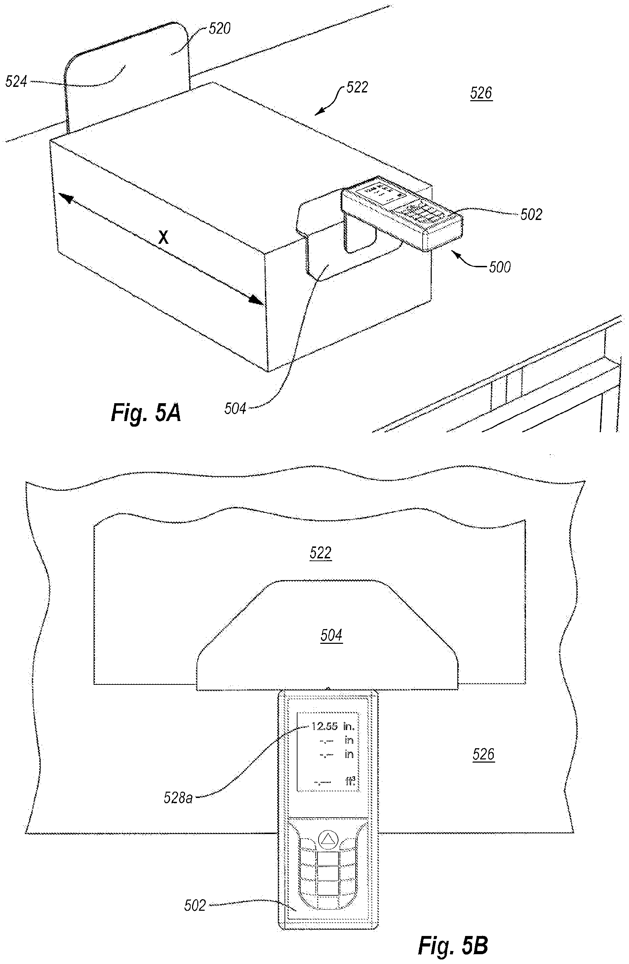

Examples of portions of the method 400 are illustrated in greater detail with respect to Figures 5A-8. In particular, Figures 5A-8 illustrate example manners in which measurements of an item or arrangement of items may be obtained, although such embodiments are merely exemplary.

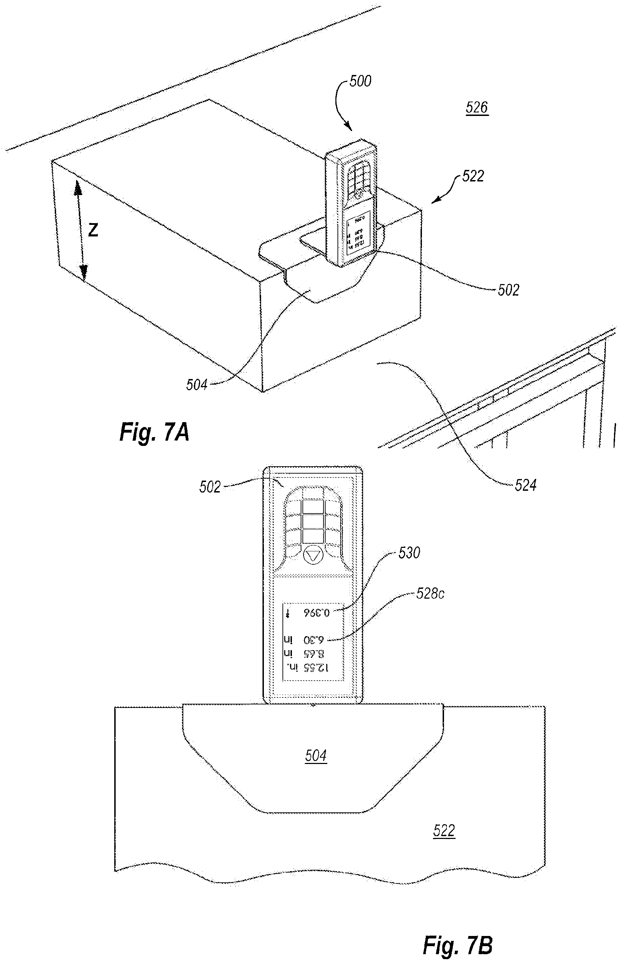

In Figures 5A-7B, a single item 522 is to be measured and packaged. The item 522 is illustrated as having a generally regular, box-like shape. It will be appreciated that this is, however, merely for simplicity in illustration and that in other embodiments, the item 522 may take any number of regular, irregular, or other shapes, and may indeed be a combination of a number of different components, each of which may have any of a number of different sizes, shapes, or other configurations.

In Figure 5A, the to-be-packaged item 522 is positioned relative to a packaging station 526. In this embodiment, the packaging station 526 is a table on which the item 522 is positioned, although the packaging station 526 may take any other suitable form. To obtain a first measurement, a measurement device 500 is positioned relative to the item 522. In this particular embodiment, the measurement device 500 includes a measurement component 502 attached to a bracket 504. The bracket 504 may be abutted against the item 522. As show in Figure 5A, for instance, the bracket 504 may have upper and back plates. The upper and back plates have interior surfaces that are positioned in engagement with a top and side surface of the item 522. Thereafter, the measurement device 500 may be activated to obtain a measurement.

In this particular embodiment, a stop component 520 is also positioned against the item 522. In particular, the stop component 520 may be positioned along a surface opposing the side surface of the item 522 engaged by the back plate of the bracket 504. As a result, surfaces of the bracket 504 and the stop component 520 may be separated by a distance generally corresponding to one dimension of the item 522. In Figure 5A, the measurement device 500 and the stop component 520 are separated by an "x" dimension of the item 522.

The stop component 520 may take any suitable form. In particular, the stop component 520 may provide a surface that reflects back light, waves, or another particle, matter, wave, or other form emitted from the measurement component 502. For instance, in Figure 5A, a reflection point 524 is illustrated where a laser or other measurement means is directed. The stop component 520 can thus facilitate obtaining of an accurate measurement with respect to the distance "x".

It should be appreciated that the stop component 520 may be arranged or formed in a variety of different ways. In one embodiment, the stop component 520 may be built into the packaging station 526. For instance, the packaging station 526 may have a three-plane rest in which an item can be positioned, with each of three planes acting as a stop plate to engage a corresponding surface of to-be-packaged items. In another embodiment, the stop component 520 may be handled manually. For instance, an operator of the measurement device 500 may hold the measurement component 502 in one hand, and the stop component 520 in another hand. When the measurement component 502 and stop component 520 are aligned the operator may then selectively activate the measurement device 500 and obtain a first dimension.

In Figure 5B, a more particular view of the result of obtaining the first measurement (*i.e.,* in the "x" dimension) is shown. In this particular embodiment, the first measurement is about 12.55 inches and is identified with first indicia 528a on a display of the measurement device 502. While the illustrated dimension is measured in inches, any measurement convention or unit may be used. Thus, a measurement may be made in any suitable English or Metric unit. In some embodiments, the measurement component 502 can be selectively changed between desired measurement conventions or units.

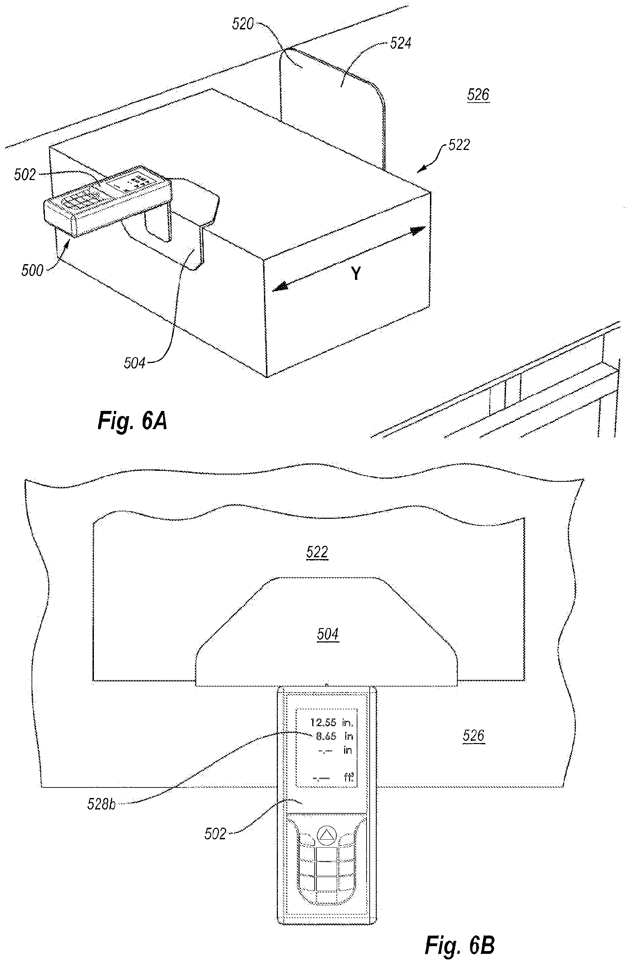

Figures 6A and 6B illustrate a second measurement being taken of the item 522. In particular, the measurement device 500 is being used in connection with the stop component 520 to obtain a second measurement in the "y" direction. The manner of obtaining the measurement is substantially the same as that described above with respect to Figures 5A and 5B, except that the bracket 204 is engaged against a different side surface of the item 522, and the different side surface is offset at about ninety degrees relative to the side surface used in obtaining the first measurement.

As shown in Figure 6B, when the second measurement is obtained, second indicia 528b on the display of the measurement component 502 may be updated. Although not illustrated, the area of a surface or plane defined by the "x" and "y" dimensions may also be updated at that time, although such a configuration is merely optional.

A third measurement is also obtained, as is illustrated in Figures 7A and 7B. In this particular embodiment, the measurement deice 500 is being used to obtain the illustrated "z" dimension. To obtain such a dimension, the measurement device 500 is positioned against the item 522 by, for example, abutting the bracket 504 against two surfaces of the item 522. In this embodiment, the back plate of the bracket 504 is abutted against the top surface of the item 522 while an upper surface of the bracket 504 is abutted against a side surface of the item 522. As a result, in the orientation shown in Figure 7A, the measurement device 500 is directed downward. A reflection point 524 may be made on the packaging station 526 such that, in this embodiment, the operator may not use a separate stop component. When the measurement device 500 is activated-which may be selectively or continuously-the obtained measurement may be made and/or updated. For instance, as shown in Figure 7B, the obtained measurement may be indicated by indicia 528c on the display of the measurement component 502. As measurements in each of three orthogonal dimensions have thus been obtained, the measurement component 502 may also calculate a volume of the item 522, which is illustrated by indicia 530. The indicated measurements and volume may also generally correspond to an interior volume of an on-demand or other custom package created to enclose the item 522.

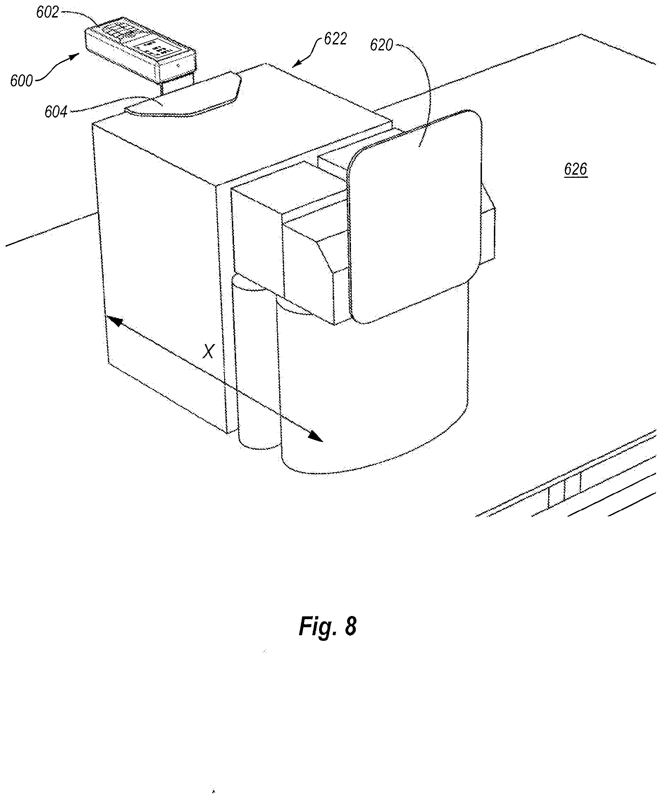

As noted above, the systems, methods, components, apparatus, and assemblies of the present invention are not limited to use with single items or items having a regular shape. As shown in Figure 8, for instance, a measurement device 600 according to the present disclosure may also be used in connection with an arrangement of multiple items that do not form a perfect rectangular shape. For instance, in Figure 8, at least six items are arranged to form a generally rectangular shape; however, the shape has openings and voids not filled in with other items. Nevertheless, the measurement device 602 may obtain a measurement of each of three dimensions. For instance, in the illustrated aspect, a stop component 620 may be placed at a distal end of the collection of items 622, and the measurement device 602 at a proximal, opposing end. For instance, a bracket 604 attached to a measurement component 602 may engage one of the items 622. A measurement may then be taken of the items in the "x" dimension. Although not illustrated, the measurement device 600 and/or stop component 620 may then be moved or repositioned so as to obtain measurements in other dimensions. In some embodiments, the bracket 604 may not be suitable based on a shape or configuration of the items 622. In such a case, the bracket 604 may be removable for a measurement to be made without the aid of the bracket 604.

As will be appreciated in view of the disclosure herein, various embodiments of the present disclosure can provide any number of benefits, not the least of which is a reduction in errors in packaging design and/or cost savings at least in terms of production time. For instance, example embodiments may be usable with large as well as small items. For instance, even items having dimensions as small as an inch may be measured. Larger items may also be measured. For very large items, a stop component (*e.g*., a target plate or angle) may be placed against the items, or the item may be placed against a wall or another object to obtain a reading.

Furthermore, embodiments of the present disclosure may be used to measure items of a variety of different types, including rigid, compressible, flexible, and other items. Compressible or flexible items may, for instance, be easily adjusted by an operator of a measurement device to obtain an accurate measurement. Moreover, items of different shapes, including items with sharp objects that stick-out from other objects, or a pile of items may be measured. Further still, a measurement device may obtain measurements regardless of the color or surface finish of the items or location of the items. Such benefit may be particularly desirable in cases where, for instance, items or a location of items is difficult for use with a camera or scanner. More particularly, a scanner or camera may have difficultly identifying dimensions based on color or surface finish features, but measurement devices of the present disclosure may eliminate such difficulties.

In accordance with other aspects, embodiments of the present disclosure allow lean, mobile, and fast production. For instance, as items are transported by a conveyor, cart, belt, roller, or other mechanism, or placed at a packaging location, the items can be measured without any need to move the products. Thus, by reducing the movement of the items (*e.g*., to a particular measurement location) the production time can be decreased and efficiency increased.

Further still, systems reliant on manual input for dimensional input are often prone to error. By way of illustration, an operator reading a value from a measuring stick or tape can rely on a slow and human-error prone process of interpreting the results and thereafter also attempting to accurately record the measurements into an on-demand package production machine. Regardless of whether such transfer is performed by voice, keyboard, touch screen, or other means, the manual input can be affected by human and/or communication errors. By automating not only the determination of the measurements but also the transfer thereof, such errors can be reduced if not eliminated.

Errors may also exist in other automated systems. For instance, and as previously noted, an automated scanner based on laser, light-grid, ultra-sound, or other technologies may have difficulty distinguishing between items that are to be packaged and materials that should not be measured, such as a surrounding placement device. Items may also be positioned within a bulky plastic bag, have straps that hang out, or otherwise include items that are not easily stackable or do not remain in a desired state (*e.g*., compressed, or moved state for a flexible device). These issues may interfere with accuracy in automated imaging processes, but using embodiments of the present disclosure may be avoided as an operator can control a measurement device while also manipulating the items into a desired position or state. Some devices, such as a three-dimensional camera, may also have difficulty detecting dark or other colors, high gloss or reflective materials, or thin or sharp objects that stick out from a main body, which could lead to errors.

Further still, in accordance with some aspects, volumetric data may be computed by a measurement device and/or a package production machine. The volumetric data optionally exists as a check value that can ensure that communication between the measurement device and an on-demand or other package production machine results in correct data transfer.

In addition, the disclosed system has a reduced cost relative to other systems that could be used or produced. While a tape measurer or other similar manual system may have a reduced direct cost, errors as discussed above may increase costs by way of errors or inefficiencies. The costs may be significantly less than other alternatives that limit the risk for human error, and even further reduced compared to fully automated systems that do not require direct labor.

The discussion herein refers to a number of methods and method steps and acts that may be performed. It should be noted, that although the method steps and acts may be discussed in a certain order or illustrated in a flow chart as occurring in a particular order, no particular ordering is necessarily required unless specifically stated, or required because an act is dependent on another act being completed prior to the act being performed.

Embodiments of the present disclosure may comprise or utilize a special purpose or general-purpose computer including computer hardware, such as, for example, one or more processors and system memory, as discussed in greater detail below. Embodiments within the scope of the present disclosure also include physical and other computer-readable media for carrying or storing computer-executable instructions and/or data structures. Such computer-readable media can be any available media that can be accessed by a general purpose or special purpose computer system. Computer-readable media that store computer-executable instructions are physical storage media. Computer-readable media that carry computer-executable instructions are transmission media. Thus, by way of example, and not limitation, embodiments of the disclosure can comprise at least two distinctly different kinds of computer-readable media, including at least computer storage media and/or transmission media.

Examples of computer storage media include RAM, ROM, EEPROM, CD-ROM or other optical disk storage, magnetic disk storage or other magnetic storage devices, or any other non-transmission medium which can be used to store desired program code means in the form of computer-executable instructions or data structures and which can be accessed by a general purpose or special purpose computer.

A "network" is defined as one or more data links that enable the transport of electronic data between computer systems and/or modules, engines, and/or other electronic devices. When information is transferred or provided over a network or another communications connection (either hardwired, wireless, or a combination of hardwired or wireless) to a computer, the computer properly views the connection as a transmission medium. Transmissions media can include a network and/or data links, carrier waves, wireless signals, and the like, which can be used to carry desired program code means in the form of computer-executable instructions or data structures and which can be accessed by a general purpose or special purpose computer. Combinations of physical storage media and transmission media should also be included within the scope of computer-readable media.

Further, upon reaching various computer system components, program code means in the form of computer-executable instructions or data structures can be transferred automatically from transmission media to computer storage media (or vice versa). For example, computer-executable instructions or data structures received over a network or data link can be buffered in RAM within a network interface module (e.g., a "NIC"), and then eventually transferred to computer system RAM and/or to less volatile computer storage media at a computer system. Thus, it should be understood that computer storage media can be included in computer system components that also (or even primarily) utilize transmission media.

Computer-executable instructions comprise, for example, instructions and data which, when executed at a processor, cause a general purpose computer, special purpose computer, or special purpose processing device to perform a certain function or group of functions. The computer executable instructions may be, for example, binaries, intermediate format instructions such as assembly language, or even source code. Although the subject matter has been described in language specific to structural features and/or methodological acts, it is to be understood that the subject matter defined in the appended claims is not necessarily limited to the described features or acts described above, nor performance of the described acts or steps by the components described above. Rather, the described features and acts are disclosed as example forms of implementing the claims.

Those skilled in the art will appreciate that the embodiments may be practiced in network computing environments with many types of computer system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, pagers, routers, switches, and the like. Embodiments may also be practiced in distributed system environments where local and remote computer systems, which are linked (either by hardwired data links, wireless data links, or by a combination of hardwired and wireless data links) through a network, both perform tasks. In a distributed computing environment, program modules may be located in both local and remote memory storage devices.

Those skilled in the art will also appreciate that embodiments of the present disclosure may be practiced in special-purpose or other computing devices integrated within or coupled to packaging machines, whether by a network connection, wireless connection, or hardwire connection. Exemplary packaging machines may include machines that cut or crease packaging materials to form packaging templates. Example packaging machines suitable for use with embodiments of the present disclosure may also directly, or indirectly, execute program code that enables the packaging machine to accept dimensional inputs and design a customized packaging template based on the input. Such input may be provided manually or, as described herein, may be provided by a measurement device that, for example, determines desired dimensions and automatically transfers them to the packaging machine without requiring that the operator or user manually input dimensions.

Although the foregoing embodiments have been described in some detail by way of illustration and example, for purposes of clarity and understanding, certain changes and modifications will be obvious to those with skill in the art in view of the disclosure herein. The described embodiments are to be considered in all respects only as illustrative and not restrictive. Thus, all changes which come within the meaning and range of the claims are to be embraced within their scope.

## Claims

1. A measurement device, comprising:
an electronic measurement component (202) adapted for obtaining measurements of one or more measurable items made in at least three dimensions, the electronic measurement component (202) comprises:
a first end; and
an emission mechanism (206) configured to direct a measurement element in a direction generally normal to the first end; and
a bracket (204) secured to the electronic measurement component (202), wherein the bracket (204) is adapted to engage with one or more surfaces of the one or more measureable items to facilitate proper positioning of the electronic measurement component (202) relative to the one or more measureable items in order to accurately obtain the measurements made in at least three dimensions, the bracket (204) comprising:
an engagement angle (216) defined by an upper plate (208) and a back plate (212) that extends from an end of the upper plate (208), the upper plate (208) and the back plate (212) being perpendicular relative to each other, the upper plate (208) and the back plate (212) defining at least two engagement surfaces for engaging the one or more measurable items, a first engagement surface of the at least two engagement surfaces being aligned with the first end of the electronic measurement component (202); and
an attachment angle (218) defined by a mounting plate (210) and a transition plate (214) that extends from an end of the mounting plate (210), the mounting plate (210) and the transition plate (214) being perpendicular relative to each other, the mounting plate (210) defining an attachment surface for connecting the attachment angle (218) to the electronic measurement component (202), the transition plate (214) defining a transition surface for connecting the mounting plate (210) to the engagement angle (216), and the transition plate (214) and the back plate (212) being fixedly connected to one another,
wherein the upper plate (208) and the mounting plate (210) are parallel and the back plate (212) and the transition plate (214) are parallel, and wherein the upper plate (208) and the mounting plate (210) are offset from each other by a distance, the distance extending in a direction parallel to the back plate (212) and the transition plate (214).

2. The measurement device recited in claim 1, wherein
the upper plate (208) and the back plate (212) are integrally formed, wherein each of the upper plate (208) and the back plate (212) have an interior surface that define the at least two engagement surfaces; and
the transition plate (214) being integrally formed with the mounting plate (210), wherein the transition plate (214) is secured to an exterior surface of the back plate (212) and is vertically offset with respect thereto, such that the mounting plate (210) is parallel to the upper plate (208) but resides in a plane offset with respect thereto.

3. The measurement device recited in claim 2, wherein the engagement angle (204) includes:
a second engagement surface extending from the first engagement surface and being offset from the electronic measurement component (202) by a distance extending in a direction generally parallel to the first engagement surface or the emission end of the electronic measurement component (202).

4. The measurement device recited in any of the preceding claims, wherein the electronic measurement component (202) comprises:
a processor; and
a light beam emitter and receiver, wherein the light beam emitter and receiver are communicatively linked to the processor, and wherein the light beam emitter and receiver are configured to be selectively activated and to thereby collectively determine a distance based on emission and reception of a light beam.

5. The measurement device recited in any of the preceding claims further comprising:
a stop component (520) configured to be placed adjacent to a surface of the one or more measurable items that is opposite to the surface engaged by the bracket (204) to facilitate obtaining of the measurements made in at least three dimensions, wherein the stop component (520) is selected from the group consisting of: (1) a handheld stop component; (2) a wall; and (3) a surface of a table.

6. The measurement device recited in any of the preceding claims, wherein the bracket (204) is selectively detachable from the measurement device (200).

7. The measurement device recited in any of the preceding claims further comprising:
a package production machine (106) communicatively linked to the measurement device (104, 200) and configured to obtain dimensional information obtained by the measurement device (104, 200) and to design and produce a package template from raw production materials, the package production machine having:
a package design component (108) configured to receive the measurements made in at least three dimensions from the electronic measurement component (202) and design a package template using the measurements made in at least three dimensions; and
a production component (110) connected to the package design component (108) and configured to access the package template design and use available raw packaging materials to produce the package template designed by the package design component (108) by cutting, creasing, scoring, perforating, or otherwise manipulating raw production materials, wherein the production component (110) includes one or more tools to perform any combination of making cuts, scores, perforations, folds, and/or creases.

8. The measurement device recited in claim 7, wherein the package design component (108) is configured to automatically select a packaging template style from a plurality of packaging template styles based on the proportions of the measurements obtained by the electronic measurement component (202).

9. The measurement device recited in any of the preceding claims, wherein the emission mechanism is configured to extend or emit at least one of a laser, a sound wave, or a measuring tape.

10. The measurement device recited in claim 9, wherein the electronic measurement component is configured to communicate with a package production machine by transmitting dimensional information to the package production machine.

11. The measurement device recited in any preceding claim, wherein the engagement angle has a first width and the attachment angle has a second width, the second width being less than the first width.

12. The measurement device recited in any preceding claim, wherein at least one of the at least two engagement surfaces defines cut corners.

## Patentansprüche

1. Eine Messvorrichtung, umfassend:
eine elektronische Messkomponente (202), die zum Erhalten von Messungen eines oder mehrerer messbarer Gegenstände, die in mindestens drei Dimensionen durchgeführt werden, angepasst ist, wobei die elektronische Messkomponente (202) umfasst:
ein erstes Ende; und
einen Emissionsmechanismus (206), der so konfiguriert ist, dass er ein Messelement in eine Richtung lenkt, die im Allgemeinen senkrecht zum ersten Ende verläuft; und eine Halterung (204), die an der elektronischen Messkomponente (202) befestigt ist,
wobei die Halterung (204) so angepasst ist, dass sie mit einer oder mehreren Oberflächen des einen oder der mehreren messbaren Gegenstände in Eingriff kommt, um die richtige Positionierung der elektronischen Messkomponente (202) relativ zu dem einen oder den mehreren messbaren Gegenständen zu erleichtern, um die in mindestens drei Dimensionen durchgeführten Messungen genau zu erhalten, wobei die Halterung (204) umfasst:
einen Eingriffswinkel (216), der durch eine obere Platte (208) und eine Rückplatte (212) definiert ist, die sich von einem Ende der oberen Platte (208) aus erstreckt, wobei die obere Platte (208) und die Rückplatte (212) senkrecht zueinander stehen, wobei die obere Platte (208) und die Rückplatte (212) mindestens zwei Eingriffsflächen zum Eingriff mit dem einen oder den mehreren messbaren Gegenständen definieren, wobei eine erste Eingriffsfläche der mindestens zwei Eingriffsflächen an dem ersten Ende der elektronischen Messkomponente (202) ausgerichtet ist; und
einen Befestigungswinkel (218), der durch eine Montageplatte (210) und eine Übergangsplatte (214) definiert ist, die sich von einem Ende der Montageplatte (210) aus erstreckt, wobei die Montageplatte (210) und die Übergangsplatte (214) senkrecht zueinander stehen, wobei die Montageplatte (210) eine Befestigungsfläche zum Verbinden des Befestigungswinkels (218) mit der elektronischen Messkomponente (202) definiert,
wobei die Übergangsplatte (214) eine Übergangsfläche zum Verbinden der Montageplatte (210) mit dem Eingriffswinkel (216) definiert und die Übergangsplatte (214) und die Rückplatte (212) fest miteinander verbunden sind,
wobei die obere Platte (208) und die Montageplatte (210) parallel sind und die Rückplatte (212) und die Übergangsplatte (214) parallel sind, und wobei die obere Platte (208) und die Montageplatte (210) um einen Abstand voneinander versetzt sind, wobei sich der Abstand in einer Richtung parallel zu der Rückplatte (212) und der Übergangsplatte (214) erstreckt.

2. Messvorrichtung nach Anspruch 1, wobei die obere Platte (208) und die Rückplatte (212) einstückig ausgebildet sind, wobei sowohl die obere Platte (208) als auch die Rückplatte (212) eine Innenfläche aufweisen, die die mindestens zwei Eingriffsflächen definieren; und die Übergangsplatte (214) einstückig mit der Montageplatte (210) ausgebildet ist, wobei die Übergangsplatte (214) an einer Außenfläche der Rückplatte (212) befestigt ist und vertikal in Bezug auf diese versetzt ist, so dass die Montageplatte (210) parallel zur oberen Platte (208) ist, aber in einer in Bezug auf diese versetzten Ebene liegt.

3. Messvorrichtung nach Anspruch 2, wobei der Eingriffswinkel (204) einschließt:
eine zweite Eingriffsfläche, die sich von der ersten Eingriffsfläche aus erstreckt und von der elektronischen Messkomponente (202) um einen Abstand versetzt ist, der sich in einer Richtung allgemein parallel zur ersten Eingriffsfläche oder zum Emissionsende der elektronischen Messkomponente (202) erstreckt.

4. Messvorrichtung wie in irgendeinem der vorangehenden Ansprüche aufgeführt, wobei die elektronische Messkomponente (202) umfasst:
einen Prozessor; und
einen Lichtstrahlsender und -empfänger, wobei der Lichtstrahlsender und -empfänger kommunikativ mit dem Prozessor verbunden sind, und wobei der Lichtstrahlsender und - empfänger so konfiguriert sind, dass sie selektiv aktiviert werden und dadurch gemeinsam eine Entfernung auf der Grundlage einer Emission und eines Empfangs eines Lichtstrahls bestimmen.

5. Messvorrichtung wie in irgendeinem der vorangehenden Ansprüche aufgeführt, ferner umfassend:
eine Anschlagkomponente (520), die so konfiguriert ist, dass sie angrenzend an eine Oberfläche des einen oder der mehreren messbaren Gegenstände angeordnet werden kann, die der Oberfläche gegenüberliegt, an der die Halterung (204) angreift, um das Erhalten der Messungen in mindestens drei Dimensionen zu erleichtern, wobei die Anschlagkomponente (520) ausgewählt ist aus der Gruppe bestehend aus : (1) einer handgehaltenen Anschlagkomponente; (2) einer Wand; und (3) einer Oberfläche eines Tisches.

6. Messvorrichtung wie in irgendeinem der vorangehenden Ansprüche aufgeführt, wobei die Halterung (204) selektiv von der Messvorrichtung (200) abnehmbar ist.

7. Messvorrichtung irgendwelchen der vorangehenden Ansprüchen aufgeführt, ferner umfassend:
eine Verpackungsproduktionsmaschine (106), die kommunikativ mit der Messvorrichtung (104, 200) verbunden und so konfiguriert ist, dass sie durch die Messvorrichtung (104, 200) erhaltene Abmessungsinformationen erhält und eine Verpackungsvorlage aus Rohproduktionsmaterialien entwirft und herstellt, wobei die Verpackungsproduktionsmaschine aufweist:
eine Verpackungsdesignkomponente (108), die so konfiguriert ist, dass sie die in mindestens drei Dimensionen durchgeführten Messungen von der elektronischen Messkomponente (202) empfängt und eine Verpackungsvorlage unter Verwendung der in mindestens drei Dimensionen durchgeführten Messungen entwirft; und
eine Produktionskomponente (110), die mit der Verpackungsdesignkomponente (108) verbunden und so konfiguriert ist, dass sie auf die Verpackungsdesignvorlage zugreifen und verfügbare Verpackungsrohstoffe verwenden kann, um die von der Verpackungsdesignkomponente (108) entworfene Verpackungsvorlage durch Schneiden, Rillen, Einkerben, Perforieren oder anderweitige Manipulation von Produktionsrohstoffen herzustellen, wobei die Produktionskomponente (110) ein oder mehrere Werkzeuge zur Durchführung einer beliebigen Kombination von Schnitten, Rillen, Perforationen, Falten und/oder Knicken umfasst.

8. Messvorrichtung nach Anspruch 7, wobei die Verpackungsdesignkomponente (108) so konfiguriert ist, dass sie automatisch einen Verpackungsvorlagenstil aus einer Vielzahl von Verpackungsvorlagenstilen auswählt, basierend auf den Proportionen der durch die elektronische Messkomponente (202) erhaltenen Messungen.

9. Messvorrichtung wie in irgendeinem der vorangehenden Ansprüche, wobei der Emissionsmechanismus so konfiguriert ist, dass er mindestens einen Laser, eine Schallwelle oder ein Maßband ausdehnt oder aussendet.

10. Messvorrichtung nach Anspruch 9, wobei die elektronische Messkomponente so konfiguriert ist, dass sie mit einer Maschine zur Herstellung von Verpackungen durch Übertragung von Maßinformationen an die Maschine zur Herstellung von Verpackungen kommuniziert.

11. Messvorrichtung wie in irgendeinem der vorangehenden Ansprüche, wobei der Eingriffswinkel eine erste Breite und der Befestigungswinkel eine zweite Breite hat, wobei die zweite Breite kleiner ist als die erste Breite.

12. Messvorrichtung wie in irgendeinem der vorangehenden Ansprüche, wobei mindestens eine der mindestens zwei Eingriffsflächen Schnittkanten definiert.

## Revendications

1. Dispositif de mesure comprenant :
un composant de mesure électronique (202) configuré pour l'obtention de mesures d'un ou plusieurs objets mesurables fabriqués selon au moins trois dimensions, le dispositif de mesure électronique (202) comprenant :
une première extrémité ; et
un mécanisme à émission (206) configuré pour diriger un élément de mesure dans une direction sensiblement orthogonale par rapport à la première extrémité ;
et une patte (204) fixée au composant de mesure électronique (202), selon lequel la patte (204) est configurée pour s'engager avec une ou plusieurs surfaces du ou des plusieurs objets mesurables afin de faciliter le positionnement correct du composant électronique de mesure (202) par rapport à l'objet ou aux plusieurs objets mesurables afin d'obtenir des mesures précises faites selon au moins trois directions, la patte (204) comprenant :
un angle d'engagement (216) défini par une plaque supérieure (208) et une plaque arrière (212) s'étendant depuis une extrémité de la plaque supérieure (208), la plaque supérieure (208) et la plaque arrière (212) étant perpendiculaires l'une par rapport à l'autre, la plaque supérieure (208) et la plaque arrière (212) définissant au moins deux surfaces d'engagement pour s'engager avec le ou les objets mesurables, une première surface d'engagement des au moins deux surfaces d'engagement étant alignée avec la première extrémité du composant de mesure électronique (202) ; et
un angle de fixation (218) défini par une plaque de montage (210) et une plaque de transition (214) s'étendant depuis une extrémité de la plaque de montage (210), la plaque de montage (210) et la plaque de transition (214) étant perpendiculaires l'une par rapport à l'autre, la plaque de montage (210) définissant une surface de fixation pour connecter l'angle de fixation (218) au composant électronique de mesure (202), la plaque de transition (214) définissant une surface de transition pour connecter la plaque de montage (210) à l'angle d'engagement (216), et la plaque de transition (214) et la plaque arrière (212) étant connectées de manière fixe l'une à l'autre ;
selon lequel la plaque supérieure (208) et la plaque de fixation (210) sont parallèles l'une à l'autre et la plaque arrière (212) et la plaque de transition (214) sont parallèles l'une à l'autre, et selon lequel la plaque supérieure (208) et la plaque de montage (210) sont décalées l'une par rapport à l'autre par une distance, cette distance s'étendant selon une direction parallèle à la plaque arrière (212) et la plaque de transition (214) .

2. Dispositif de mesure selon la revendication 1, selon lequel :
la plaque supérieure (208) et la plaque arrière (212) sont formées de manière intégrale, selon lequel chacune parmi la plaque supérieure (208) et la plaque arrière (212) présente une surface intérieure définissant les au moins deux surfaces d'engagement ; et
la plaque de transition (214) est formée de manière intégrale avec la plaque de montage (210), selon lequel la plaque de transition (214) est fixée à une surface extérieure de la plaque arrière (212) et est décalée verticalement par rapport à celle-ci, de sorte que la plaque de montage (210) est parallèle à la plaque supérieure (208), mais demeure dans un plan décalé par rapport à celle-ci.

3. Dispositif de mesure selon la revendication 2, selon lequel l'angle d'engagement (204) comporte :
une deuxième surface d'engagement s'étendant depuis la première surface d'engagement et étant décalée du composant électronique de mesure (202) par une distance s'étendant selon une direction sensiblement parallèle à la première surface d'engagement ou à l'extrémité à émission du composant de mesure électronique (202).

4. Dispositif de mesure selon l'une quelconque des revendications précédentes, selon lequel le composant électronique de mesure (202) comprend :
un processeur ; et
un émetteur et récepteur de rayon de lumière, selon lequel l'émetteur et récepteur de rayon de lumière sont liés en communication au processeur, et selon lequel le récepteur et émetteur de rayon de lumière sont configurés pour être activés de manière sélective et ainsi déterminer ensemble une distance sur la base d'une émission et d'une réception d'un rayon de lumière.

5. Dispositif de mesure selon l'une quelconque des revendications précédentes comprenant en outre :
un composant d'arrêt (520) configuré pour être placé de manière adjacente à une surface d'un ou des plusieurs objets mesurables à l'opposé de la surface engagée par la patte (204) afin de faciliter l'obtention des mesures faites selon au moins trois dimensions, selon lequel le composant d'arrêt (520) est choisi dans le groupe consistant en :
(1) un composant d'arrêt porté à la main ;
(2) une paroi ; et
(3) une surface d'une table.

6. Dispositif de mesure selon l'une quelconque des revendications précédentes, selon lequel la patte (204) est détachable de manière sélective du dispositif de mesure (200).

7. Dispositif de mesure selon l'une quelconque des revendications précédentes comprenant en outre :
une machine de production de paquets (106) liée en communication au dispositif de mesure (104,200) et configurée pour obtenir des informations dimensionnelles obtenues par le dispositif de mesure (104, 200) et pour concevoir et produire une ébauche de paquet à partir de matières premières de production, la machine de production de paquets présentant :
un composant de conception de paquet (108) configuré pour recevoir des mesures faites selon au moins trois directions en provenance du composant de mesure électronique (202) et pour concevoir une ébauche de paquet mettant en œuvre les mesures faites selon au moins trois directions ; et
un composant de production (110) connecté au composant de conception de paquet (108) et configuré pour accéder à la conception de l'ébauche de paquet et pour mettre en œuvre toute matière première de paquet disponible afin de produire une ébauche de paquet conçue par le composant de conception de paquet (108) en coupant, marquant des plis, lacérant, perforant, ou en manipulant par tout biais des matières premières de production, selon lequel le composant de production (110) comporte un ou plusieurs outils afin d'effectuer toute combinaison d'application de coupes, de lacérations, perforations, plis, et/ou marquages de plis.

8. Dispositif de mesure selon la revendication 7, selon lequel le composant de conception de paquet (108) est configuré pour sélectionner de manière automatique un style d'ébauche de paquet à partir d'une pluralité de styles d'ébauches de paquet sur la base des proportions des mesures obtenues par le biais du composant de mesure électronique (202).

9. Dispositif de mesure selon l'une quelconque des revendications précédentes, selon lequel le mécanisme à émission est configuré pour étendre ou émettre au moins un élément parmi un laser, une onde sonore, ou un ruban de mesure.

10. Dispositif de mesure selon la revendication 9, selon lequel le composant de mesure électronique est configuré pour communiquer avec une machine de production de paquets en transmettant des informations dimensionnelles à la machine de production de paquets.

11. Dispositif de mesure selon l'une quelconque des revendications précédentes, selon lequel l'angle d'engagement présente une première largeur et l'angle de fixation présente une deuxième largeur, la deuxième largeur étant inférieure à la première largeur.

12. Dispositif de mesure selon l'une quelconque des revendications précédentes, selon lequel au moins une des au moins deux surfaces d'engagement définit des coins coupés.
